# EUROPÄISCHE PATENTSCHRIFT

(11) **EP 2 078 635 B1**
(45) Veröffentlichungstag und Bekanntmachung des Hinweises auf die Patenterteilung: **20.03.2013**
(21) Anmeldenummer: 09000290.8
(22) Anmeldetag: 12.01.2009
(51) Int. Cl.: B60N 2/06, B60N 2/07

(54) **Sitzanordnung mit einer Zwangsführung**
Seating assembly with a compulsory guide
Agencement de siège doté d'un guidage forcé

(30) Priorität: 14.01.2008 DE 102008004231
(43) Veröffentlichungstag der Anmeldung: 15.07.2009
(73) Patentinhaber: GM Global Technology Operations LLC, Detroit, MI 48265-3000 (US)
(72) Erfinder: Maier, Jürgen, 67808 Weitersweiler (DE)
(74) Vertreter: Strauss, Peter

(56) Entgegenhaltungen:
- EP-A2- 0 940 288
- WO-A1-2007/131761
- DE-A1-102006 022 732
- JP-A- 7 108 864

## Beschreibung

Die vorliegende Erfindung betrifft eine Sitzanordnung für ein Kraftfahrzeug mit einem Fahrzeugsitz, einer Längsführung zum Verschieben des Fahrzeugsitzes in Längsrichtung und einer Querführung zum Verschieben des Fahrzeugsitzes in Querrichtung.

Aus dem Stand der Technik ist eine Vielzahl von Sitzanordnungen bekannt, die einen Fahrzeugsitz aufweisen, der sowohl in Längsrichtung als auch in Querrichtung des Kraftfahrzeugs verschoben werden kann. Zu diesem Zweck weisen die bekannten Sitzanordnungen Längsführungen und Querführungen auf, die sich in Längsrichtung bzw. in Querrichtung des Kraftfahrzeugs erstrecken.

So offenbart die DE 41 10 998 C2 eine Sitzanordnung mit einem Fahrzeugsitz, der in Längsrichtung verschiebbar an zwei Längsführungen angeordnet ist. Die beiden Längsführungen werden dabei von jeweils einem Schienenpaar gebildet, das sich in Längsrichtung des Kraftfahrzeugs bzw. in Sitzrichtung des Fahrzeugsitzes erstreckt. Die beiden Längsführungen sind wiederum querverschiebbar an zwei Querführungen angeordnet, die unterhalb der Längsführungen angeordnet und mit dem Bodenblech des Kraftfahrzeugs verbunden sind. Die Querführungen setzen sich wiederum jeweils aus einem Schienenpaar zusammen, dass sich in Querrichtung des Kraftfahrzeugs erstreckt. Die bekannte Sitzanordnung hat unter anderem den Nachteil, dass der hintere Bereich unterhalb des Fahrzeugsitzes, der den Fußraum für die Passagiere auf der hinteren Sitzreihe ausbildet, durch die an dem Bodenblech befestigte Querführungen eingeschränkt ist.

Die EP 0 940 288 B1 offenbart eine Sitzanordnung, die im Wesentlichen denselben Aufbau wie die zuvor beschriebene Sitzanordnung aufweist, d. h. die Sitzanordnung umfasst einen Fahrzeugsitz, der über zwei Längsführungen in Längsrichtung und über zwei Querführungen in Querrichtung des Kraftfahrzeugs verschoben werden kann, wobei die Längsführungen in Querrichtung an den Querführungen geführt sind. Im Gegensatz zu der zuvor beschriebenen Sitzanordnung sind die Querführungen jedoch innerhalb einer Vertiefung in dem Bodenblech angeordnet, die sich ebenfalls in Querrichtung erstreckt. Somit ist der Fußraum für die Passagiere auf einer dahinter angeordneten Sitzreihe nicht so stark eingeschränkt wie dies beim vorangehend beschriebenen Stand der Technik der Fall ist. Dennoch ist die Handhabung dieser Sitzanordnung, insbesondere beim Verschieben des Fahrzeugsitzes, ebenfalls erschwert.

Eine weitere Sitzanordnung ist in der EP 1 140 554 B1 beschrieben. Bei der bekannten Sitzanordnung sind zwei Längsschienen in dem Fahrzeugboden eingelassen, die an ihrem hinteren Ende in zwei Querschienen übergehen, die ebenfalls in den Fahrzeugboden eingelassen sind. Der zugehörige Fahrzeugsitz weist zwei Basiselemente auf, an denen nach unten weisende Verbindungsteile vorgesehen sind. Die Verbindungsteile greifen in die im Fahrzeugboden eingelassenen Schienen ein, so dass der Fahrzeugsitz entlang der Längsschienen in Längsrichtung des Kraftfahrzeugs und entlang der Querschienen in Querrichtung des Kraftfahrzeugs verschoben werden kann. Auch die Handhabung dieses Fahrzeugsitzes ist erschwert, da der Fahrzeugsitz zunächst entlang der Längsschienen in Längsrichtung in seine hinterste Position verschoben werden muss, damit die Verbindungsteile in die Querschienen gelangen. Erst dann ist eine Querverschiebung entlang der Querschienen möglich, d. h. um den Sitz in Längs- und Querrichtung zu verschieben, muss dieser zunächst in Längsrichtung und anschließend in Querrichtung verschoben werden.

Die DE 10 2006 022 732 zeigt eine Sitzanordnung mit den Merkmalen des Oberbegriffs des Anspruchs 1.

Es ist daher eine Aufgabe der vorliegenden Erfindung, eine Sitzanordnung für ein Kraftfahrzeug mit einem Fahrzeugsitz, einer Längsführung und einer Querführung zu schaffen, die eine besonders einfache, schnelle und komfortable Handhabung beim Verschieben des Fahrzeugsitzes gewährleistet.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Sitzanordnung ist für ein Kraftfahrzeug konzipiert und weist einen Fahrzeugsitz auf, bei dem es sich vorzugsweise um einen Fahrzeugsitz handelt, der in einer Sitzreihe angeordnet ist, die vor einer weiteren Sitzreihe angeordnet ist. Es ist mindestens eine Längsführung zum Verschieben des Fahrzeugsitzes in Längsrichtung und mindestens eine Querführung zum Verschieben des Fahrzeugsitzes in Querrichtung vorgesehen. Unter der Längs- und Querrichtung ist vorzugsweise die Längs- und Querrichtung des Fahrzeugsitzes zu verstehen, wobei die Längs- und Querrichtung des Fahrzeugsitzes vorzugsweise auch der Längs- und Querrichtung des Kraftfahrzeugs entspricht. Erfindungsgemäß ist ferner eine Zwangsführung vorgesehen, die derart ausgebildet ist, dass der Fahrzeugsitz beim Verschieben in die Längs- oder Querrichtung automatisch auch in die Quer- oder Längsrichtung verschoben wird. Dies bedeutet, dass der Fahrzeugsitz beim Verschieben in die Längsrichtung automatisch auch in die Querrichtung und beim Verschieben in die Querrichtung automatisch auch in die Längsrichtung verschoben wird.

Die Erfindung hat zum einen den Vorteil, dass der Fahrzeugsitz nicht zunächst in Längsrichtung verschoben werden muss, um diesen erst anschließend in Querrichtung verschieben zu können. Darüber hinaus ist gewährleistet, dass der Fahrzeugsitz aufgrund der Zwangsführung sicher und gezielt in eine vorbestimmte Position verschoben werden kann. Letzteres ist bei einer Sitzanordnung, die einen Fahrzeugsitz aufweist, der ein freies Verschieben sowohl in Längs- als auch in Querrichtung ermöglicht, nicht gewährleistet. So eignet sich die erfindungsgemäße Sitzanordnung insbesondere für Fahrzeugsitze innerhalb eines Kraftfahrzeugs, in dem die Platzverhältnisse derart eingeschränkt sind, dass der Fahrzeugsitz ohnehin lediglich eine geringe Anzahl an vorbestimmten Positionen einnehmen kann.

In einer bevorzugten Ausführungsform der erfindungsgemäßen Sitzanordnung ist die Zwangsführung in der Art einer Kulissenführung ausgebildet.

In einer besonders bevorzugten Ausführungsform der erfindungsgemäßen Sitzanordnung weist die Zwangsführung einerseits eine Führungsnut, die fahrzeugfest oder sitzfest ausgebildet ist, und andererseits ein in der Führungsnut geführtes Führungsteil auf, dass sitzfest oder fahrzeugfest ausgebildet ist. Dies bedeutet, dass einer fahrzeugfesten Führungsnut ein sitzfestes Führungsteil und einer sitzfesten Führungsnut ein fahrzeugfestes Führungsteil zugeordnet wäre. Dank der Führungsnut und dem zugehörigen Führungsteil wird eine besonders einfache Zwangsführung in der Art einer Kulissenführung geschaffen, die eine sichere Führung des Fahrzeugsitzes in die vorbestimmten Positionen gewährleistet.

Gemäß einer weiteren bevorzugten Ausführungsform der erfindungsgemäßen Sitzanordnung weist die Führungsnut mindestens einen schräggestellten Abschnitt auf, der sich sowohl quer zur Längsrichtung als auch quer zur Querrichtung erstreckt. Dank des schräggestellten Abschnitts kann ein Verschieben des Fahrzeugsitzes in Längs- oder Querrichtung automatisch mit einer Verschiebung des Fahrzeugsitzes in Quer- oder Längsrichtung gekoppelt werden.

In einer vorteilhaften Ausführungsform der erfindungsgemäßen Sitzanordnung erstreckt sich der schräggestellte Abschnitt in einem Winkel zwischen 0° und 90° quer zur Längsrichtung. Um einen möglichst fließenden Bewegungsablauf des Fahrzeugsitzes zu ermöglichen, beträgt dieser Winkel zwischen dem schräggestellten Abschnitt und der Längsrichtung vorzugsweise 45°.

Um eine Längsverschiebung des Fahrzeugsitzes nicht in jeder Position des Fahrzeugsitzes mit einer Querverschiebung des Fahrzeugsitzes zu koppeln, weist die Führungsnut ferner einen ersten Abschnitt auf, der sich ausschließlich in Längsrichtung erstreckt. Auf diese Weise ist eine einfache und sichere Verschiebung des Fahrzeugsitzes in Längsrichtung möglich, ohne dass auf dessen unbeabsichtigte Verschiebung in Querrichtung Rücksicht genommen werden müsste.

In einer weiteren vorteilhaften Ausführungsform der erfindungsgemäßen Sitzanordnung ist der erste Abschnitt in Fahrtrichtung vor dem schräggestellten Abschnitt angeordnet. Somit ist die Längsverschiebung nur dann mit einer Querverschiebung gekoppelt, wenn der Fahrzeugsitz sich bereits in einer hinteren Position befindet und aus dieser hinteren Position weiter in Längsrichtung nach hinten verschoben wird.

In einer weiteren vorteilhaften Ausführungsform der erfindungsgemäßen Sitzanordnung weist die Führungsnut ferner einen zweiten Abschnitt auf, der sich ausschließlich in Längsrichtung erstreckt. Bezüglich der Vorteile eines solchen zweiten Abschnitts sei auf die vorangehende Beschreibung des ersten Abschnitts verwiesen.

In einer besonders vorteilhaften Ausführungsform der erfindungsgemäßen Sitzanordnung ist der zweite Abschnitt entgegen der Fahrtrichtung hinter dem schräggestellten Abschnitt angeordnet. So folgt auf den schräggestellten Abschnitt wiederum ein Abschnitt, entlang dessen der Fahrzeugsitz wiederum nur in Längsrichtung verschoben werden kann.

In einer weiteren besonders bevorzugten Ausführungsform der erfindungsgemäßen Sitzanordnung erstreckt sich der schräggestellte Abschnitt der Führungsnut derart quer zur Längsrichtung, dass der Fahrzeugsitz bei einer Verschiebung in Längsrichtung nach hinten automatisch auch in Richtung der Fahrzeugmitte verschoben wird. Diese Ausführungsform ist insbesondere für einen Fahrzeugsitz geeignet, der von einem vorderen Bereich des Fahrzeuginnenraums in einen hinteren Bereich desselben verschoben werden kann, wobei der hintere Bereich des Fahrzeuginnenraums, beispielsweise bedingt durch nach innen hervorstehende Radkästen, eine geringere Breite aufweist. So wird die Position des Fahrzeugsitzes beim Verschieben in den hinteren Bereich automatisch und kollisionsfrei angepasst, so dass die Handhabung beim Verschieben des Fahrzeugsitzes besonders einfach ist.

In einer weiteren vorteilhaften Ausführungsform der erfindungsgemäßen Sitzanordnung kann der Fahrzeugsitz in vorbestimmten Rastabständen sowohl in Längs- als auch in Querrichtung automatisch arretiert werden. Derartige Rastabstände können beispielsweise einen Zentimeter betragen. Das automatische Verrasten in vorbestimmten Rastabständen vereinfacht die Positionierung und Arretierung des Fahrzeugsitzes in der gewünschten Position.

Um den Fahrzeugsitz möglichst schnell in die gewünschte Position bringen zu können, ist in einer weiteren vorteilhaften Ausführungsform der erfindungsgemäßen Sitzanordnung ein Betätigungsmittel zum Lösen der Arretierung vorgesehen. So kann beispielsweise ein Betätigungsmittel vorgesehen sein, das keine automatische Arretierung in vorbestimmten Rastabständen zulässt, solange es betätigt wird. Ist die gewünschte Position des Fahrzeugsitzes erreicht, so kann das Betätigungsmittel losgelassen werden, um anschließend wieder eine Arretierung in den vorbestimmten Rastabständen zu ermöglichen.

Um den Fußraum für die Passagiere auf einer hinter dem Fahrzeugsitz angeordneten Sitzreihe nicht unnötig zu begrenzen, ist der Fahrzeugsitz in erfindungsgemäßen Ausführungsform der erfindungsgemäßen Sitzanordnung an der Längsführung in Längsrichtung verschiebbar angeordnet, wohingegen die Längsführung an der Querführung in Querrichtung verschiebbar angeordnet ist. Die Querführung ist somit unterhalb der Längsführung am Fahrzeugboden angeordnet.

Um eine Verkleinerung des Fußraums unterhalb des Fahrzeugsitzes weiter auszuschließen, ist die Querführung in einer weiteren bevorzugten Ausführungsform der erfindungsgemäßen Sitzanordnung in einer Vertiefung in dem Fahrzeugboden angeordnet.

Um den vorstehend genannten Vorteil noch zu vergrößern, ist die Querführung in einer weiteren besonders bevorzugten Ausführungsform der erfindungsgemäßen Sitzanordnung derart in der Vertiefung angeordnet, dass die Oberseite der Querführung in einer Ebene mit der Oberseite des Fahrzeugbodens angeordnet ist. Auf diese Weise kann eine Kollision zwischen den Füßen der Passagiere auf der hinteren Sitzreihe mit der Querführung vermieden werden, wenn die Füße in den Fußraum unterhalb des Fahrzeugsitzes eingebracht werden.

Gemäß einer weiteren bevorzugten Ausführungsform der erfindungsgemäßen Sitzanordnung ist ein Teppichboden auf dem Fahrzeugboden angeordnet, der sich über die Querführung in der Vertiefung erstreckt. Auf diese Weise ist einerseits eine Verschmutzung der Querführung unterbunden, während andererseits ein ungewolltes Verhaken der Füße der Passagiere mit der Querführung ausgeschlossen ist.

Um trotz des Teppichbodens eine Querverschiebung der Längsführung bzw. des Fahrzeugsitzes zu ermöglichen, weist der Teppichboden in einer weiteren vorteilhaften Ausführungsform der erfindungsgemäßen Sitzanordnung einen Schlitz auf, der sich oberhalb der Querführung in Querrichtung erstreckt. So kann sich das Verbindungsteil zwischen der Querführung und der Längsführung durch den Schlitz erstrecken und diesen in den entsprechenden Positionen aufweiten. Die Querverschiebung wird hierdurch nicht behindert.

Die Erfindung wird im Folgenden anhand einer beispielhaften Ausführungsform unter Bezugnahme auf die beigefügten Zeichnungen näher erläutert. Es zeigen:
- Fig. 1: eine schematische Seitenansicht einer Ausführungsform der erfindungsgemäßen Sitzanordnung in teilweise geschnittener Darstellung,
- Fig. 2: eine Draufsicht auf die Sitzanordnung von Fig. 1 mit dem Fahrzeugsitz in einer vorderen Position,
- Fig. 3: den Fahrzeugsitz von Fig. 2 in einer ersten Zwischenposition,
- Fig. 4: den Fahrzeugsitz von Fig. 2 und 3 in einer zweiten Zwischenposition und
- Fig. 5: den Fahrzeugsitz von Fig. 2 bis 4 in einer hinteren Position.

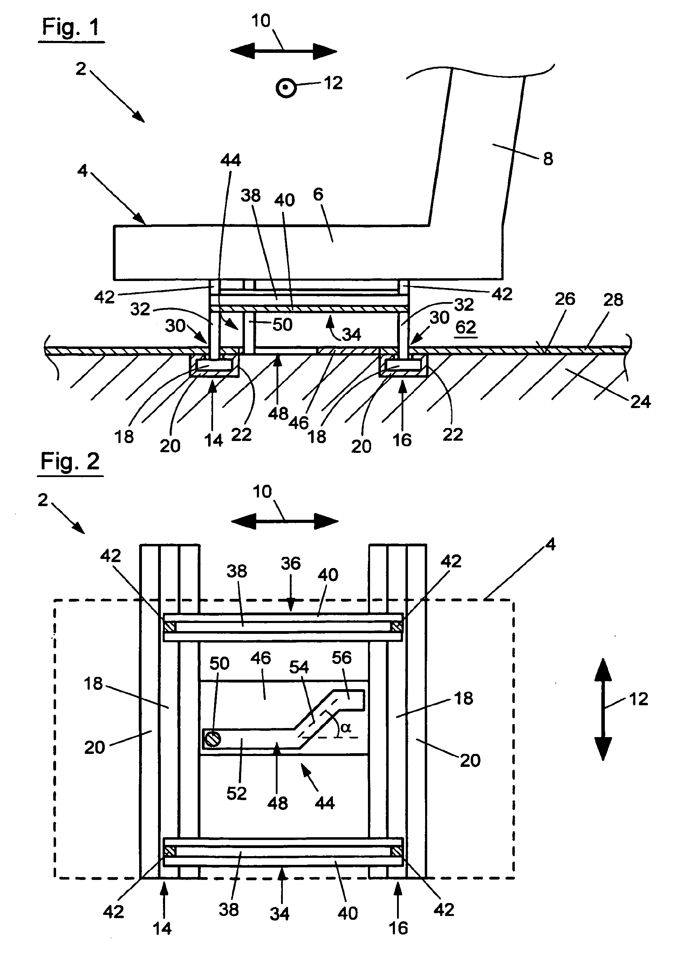

Fig. 1 zeigt eine Ausführungsform der erfindungsgemäßen Sitzanordnung 2 in einer Seitenansicht, während Fig. 2 die Sitzanordnung 2 in einer Draufsicht zeigt. Die Sitzanordnung 2 weist einen Fahrzeugsitz 4 auf, der ein Sitzteil 6 und eine Rückenlehne 8 umfasst, wobei der Fahrzeugsitz 4 in Fig. 2 nur noch anhand einer gestrichelten Linie angedeutet ist, um eine bessere Übersichtlichkeit zu gewährleisten. Die Längsrichtung des Fahrzeugsitzes 4 bzw. des Kraftfahrzeugs ist in den Figuren anhand des Doppelpfeils 10 angedeutet, wohingegen die Querrichtung des Fahrzeugsitzes 4 bzw. des Kraftfahrzeugs anhand des Doppelpfeils 12 angedeutet ist.

Die Sitzanordnung 2 weist zunächst zwei Querführungen 14, 16 auf. Die Querführungen 14, 16 sind in Längsrichtung 10 voneinander beabstandet und erstrecken sich in Querrichtung 12 parallel zueinander. Die Querführungen 14, 16 umfassen jeweils eine erste Schiene 18, die in Querrichtung 12 verschiebbar in einer zweiten Schiene 20 geführt ist. Die Querführungen 14, 16 sind in entsprechenden Vertiefungen 22 in dem Fahrzeugboden 24 angeordnet, wobei sich die Vertiefungen 22 ebenfalls in Querrichtung 12 erstrecken. Die Vertiefung 22 und die Querführungen 14, 16 sind dabei derart aufeinander abgestimmt, dass die Oberseite der Querführung 14, 16 in einer Ebene mit der Oberseite 26 des Fahrzeugbodens 24 angeordnet ist. Auf der Oberseite 26 des Fahrzeugbodens 24 ist ferner ein Teppichboden 28 angeordnet, der sich über die Querführungen 14, 16 in den Vertiefungen 22 erstreckt. Um dennoch eine sichere Funktionsweise der Querführungen 14, 16 zu gewährleisten, weist der Teppichboden 28 für jede Querführung 14, 16 jeweils einen langgestreckten Schlitz 30 auf, der sich oberhalb der jeweiligen Querführung 14, 16 in Querrichtung 12 erstreckt.

Ausgehend von den ersten Schienen 18 erstrecken sich jeweils ein erstes Verbindungsteil 32 und ein zweites Verbindungsteil (nicht dargestellt) durch den zugehörigen Schlitz 30 nach oben in Richtung des Fahrzeugsitzes 4, wobei die ersten Verbindungsteile 32 mit einer ersten Längsführung 34 und die zweiten Verbindungsteile (nicht dargestellt) mit einer zweiten Längsführung 36 verbunden sind. Die beiden Längsführungen 34, 36 sind parallel zueinander angeordnet und in Querrichtung 12 voneinander beabstandet, während sich diese in Längsrichtung 10 erstrecken. Auch die Längsführungen 34, 46 setzen sich jeweils aus einer ersten Schiene 38 und einer zweiten Schiene 40 zusammen, wobei die erste Schiene 38 in Längsrichtung 10 in der zweiten Schiene 40 geführt und längsverschiebbar ist. Die ersten bzw. zweiten Verbindungsteile 32 sind dabei jeweils mit der zweiten Schiene 40 fest verbunden. Ausgehend von jeder ersten Schiene 38 erstrecken sich weitere Verbindungsteile 42 nach oben in Richtung des Fahrzeugsitzes, wo diese fest mit dem Sitzteil 6 des Fahrzeugsitzes 4 verbunden sind. Somit ist der Fahrzeugsitz 4 an den Längsführungen 34, 36 in Längsrichtung 10 verschiebbar angeordnet, während die Längsführungen 34, 36 in Querrichtung 12 verschiebbar an den Querführungen 14, 16 angeordnet sind, wobei die Querführungen 14, 16 unterhalb der Längsführungen 34, 36 angeordnet sind. Die Querführungen 14, 16 ermöglichen somit eine Verschiebung des Fahrzeugsitzes 4 in Querrichtung 12.

Die Sitzanordnung 2 weist ferner eine Zwangsführung 44 auf, die in der Art einer Kulissenführung ausgebildet ist. Die Zwangsführung 44 weist einerseits ein am Fahrzeugboden 24 befestigtes Führungsblech 46 auf, in dem eine Führungsnut 48 ausgebildet ist. Andererseits weist die Zwangsführung 44 ein Führungsteil 50 auf, das in der Führungsnut 48 zwangsgeführt ist. In der vorliegenden Ausführungsform ist die Führungsnut 48 somit fahrzeugfest ausgebildet, wohingegen das Führungsteil 50, das an dem Sitzteil 6 des Fahrzeugsitzes 4 befestigt ist, sitzfest ausgebildet ist.

Die Führungsnut 48 weist einen ersten Abschnitt 52 auf, der sich ausschließlich in Längsrichtung 10 erstreckt. Der erste Abschnitt 52 der Führungsnut 48 ist in Fahrtrichtung vor einem schräggestellten Abschnitt 54 der Führungsnut 48 angeordnet. Der schräggestellte Abschnitt 54 der Führungsnut 48 erstreckt sich quer zur Längsrichtung 10 und quer zur Querrichtung 12 in einem Winkel α, der in der dargestellten Ausführungsform 45° beträgt. Grundsätzlich sollte der Winkel α einen Wert zwischen 0° und 90° annehmen. An seinem dem ersten Abschnitt 52 abgewandten Ende geht der schräggestellte Abschnitt 54 in einen zweiten Abschnitt 56 über, der sich wiederum ausschließlich in Längsrichtung 10 erstreckt. Der zweite Abschnitt 56 ist demzufolge entgegen der Fahrtrichtung hinter dem schrägggestellten Abschnitt 54 angeordnet.

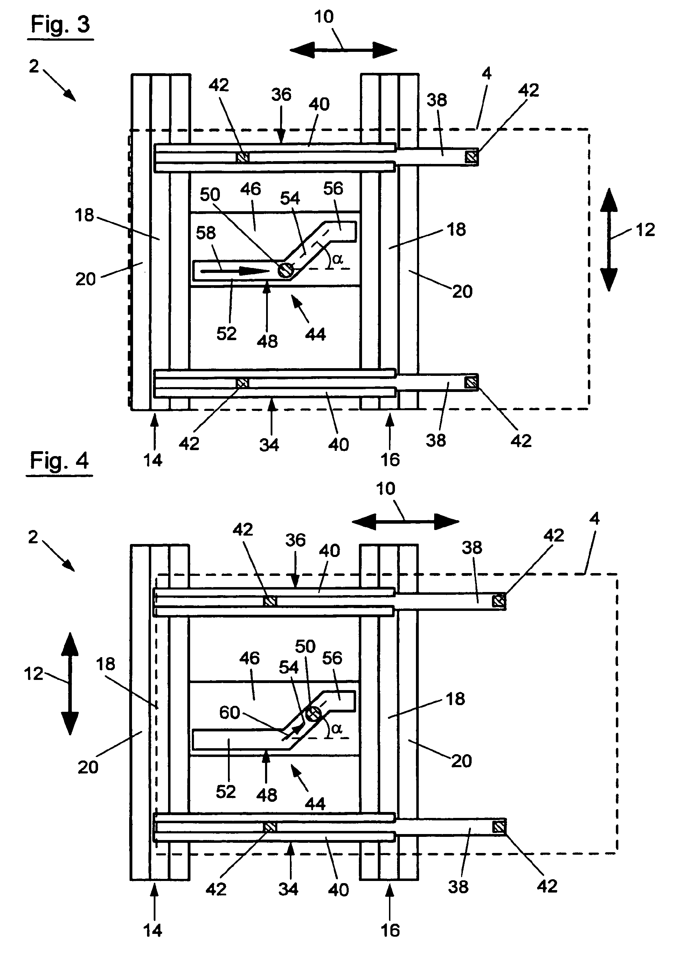

Nachstehend werden die Funktionsweise sowie weitere Merkmale der erfindungsgemäßen Sitzanordnung 2 unter Bezugnahme auf die Fig. 2 bis 5 beschrieben. In den Fig. 1 und 2 befindet sich der Fahrzeugsitz 4 in einer vorderen Position. In der vorderen Position ist das Führungsteil 50 in den in Fahrtrichtung weisenden Endabschnitt des ersten Abschnitts 52 der Führungsnut 48 aufgenommen. Wird nun der Fahrzeugsitz 4 in Längsrichtung 10 nach hinten in eine erste Zwischenposition verschoben, so bewegt sich das Führungsteil 50 innerhalb des ersten Abschnitts 52 der Führungsnut 48 nach hinten, wie dies anhand des Pfeils 58 in Fig. 3 angedeutet ist. Eine Querverschiebung des Fahrzeugsitzes 4 in Querrichtung 12 wird durch den Rand des ersten Abschnitts 52 der Führungsnut 48 unterbunden.

Wird der Fahrzeugsitz 4 ausgehend von der ersten Zwischenposition von Fig. 3 weiter in Längsrichtung 10 nach hinten verschoben, so gelangt das Führungsteil 50 in den schräggestellten Abschnitt 54 der Führungsnut 48. Der schräggestellte Abschnitt 54 der Führungsnut 48 bewirkt hierbei, dass der Fahrzeugsitz 4 beim Verschieben in Längsrichtung 10 nach hinten automatisch auch in die Querrichtung 12 verschoben wird, wie dies anhand des Pfeils 60 in Fig. 4 angedeutet ist. Entsprechend würde eine Verschiebung des Fahrzeugsitzes 4 in Querrichtung 12 automatisch auch eine Verschiebung des Fahrzeugsitzes 4 in Längsrichtung 10 bewirken, solange sich das Führungsteil 50 innerhalb des schräggestellten Abschnitts 54 der Führungsnut 48 befindet.

Der schräggestellte Abschnitt 54 der Führungsnut 48 erstreckt sich dabei derart quer zur Längsrichtung 10, dass der Fahrzeugsitz 4 bei einer Verschiebung in Längsrichtung 10 nach hinten automatisch auch in Richtung der Fahrzeugmitte verschoben wird. Bei der vorliegenden Ausführungsform wird dies dadurch erreicht, dass der schräggestellte Abschnitt 54 in Richtung der Fahrzeugmitte schräggestellt ist.

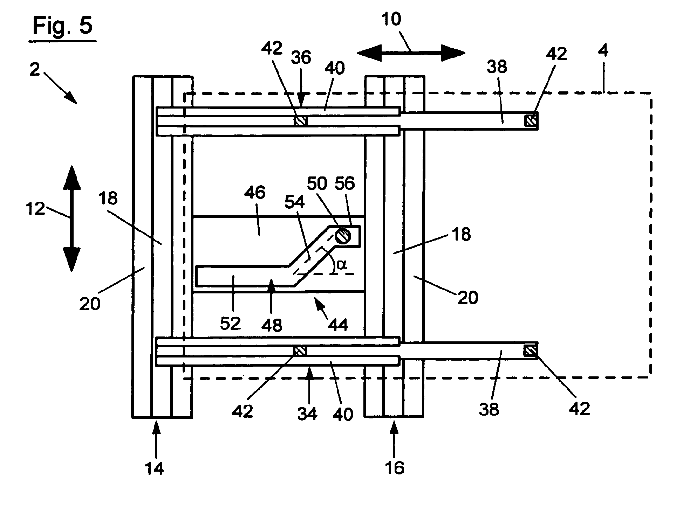

Wird der Fahrzeugsitz 4 ausgehend von der zweiten Zwischenposition von Fig. 4 weiter nach hinten geschoben, so gelangt das Führungsteil 50 letztlich in den zweiten Abschnitt 56 der Führungsnut 48, wie dies in Fig. 5 gezeigt ist. Solange sich das Führungsteil 50 innerhalb des zweiten Abschnitts 56 befindet, ist wiederum nur eine Verschiebung des Fahrzeugsitzes 4 in Längsrichtung 10 möglich.

Der Fahrzeugsitz 4 kann in vorbestimmten Rastabständen sowohl in Längs- als auch in Querrichtung 10, 12 automatisch arretiert werden, was beispielsweise über entsprechende Arretierungsmittel (nicht dargestellt) innerhalb der Querführungen 14, 16 bzw. der Längsführungen 34, 36 erreicht werden kann. Um die Arretierung lösen zu können und somit eine Verschiebung des Fahrzeugsitzes 4 in Längs- und Querrichtung 10, 12 zu ermöglichen, sollte ferner ein nicht dargestelltes Betätigungsmittel vorgesehen sein. Ein solches Betätigungsmittel könnte beispielsweise ein entsprechender Handgriff an dem Fahrzeugsitz 4 sein.

Neben dem Vorteil, dass die Handhabung des Fahrzeugsitzes 4 beim Verschieben in vorbestimmte Positionen vereinfacht ist, bietet die dargestellte Ausführungsform ferner den Vorteil, dass der Fußraum 62 zwischen dem Sitzteil 6 des Fahrzeugsitzes 4 und dem Fahrzeugboden 24 nicht von der hinteren Querführung 16 beeinträchtigt wird, da die hintere Querführung 16 innerhalb der Vertiefung 22 in dem Fahrzeugboden 24 einliegt. Darüber hinaus gewährleistet der sich über die Querführung 16 erstreckende Teppichboden 28, dass die Querführung 16 nicht verschmutzt wird.

### Bezugszeichenliste

- 2: Sitzanordnung
- 4: Fahrzeugsitz
- 6: Sitzteil
- 8: Rückenlehne
- 10: Längsrichtung
- 12: Querrichtung
- 14: Querführung
- 16: Querführung
- 18: erste Schiene
- 20: zweite Schiene
- 22: Vertiefungen
- 24: Fahrzeugboden
- 26: Oberseite des Fahrzeugbodens
- 28: Teppichboden
- 30: Schlitze
- 32: Verbindungsteile
- 34: erste Längsführung
- 36: zweite Längsführung
- 38: erste Schiene
- 40: zweite Schiene
- 42: Verbindungsteile
- 44: Zwangsführung
- 46: Führungsblech
- 48: Führungsnut
- 50: Führungsteil
- 52: erster Abschnitt
- 54: schräggestellter Abschnitt
- 56: zweiter Abschnitt
- 58: Pfeil
- 60: Pfeil
- 62: Fußraum
- α: Winkel

## Patentansprüche

1. Sitzanordnung (2) für ein Kraftfahrzeug mit einem Fahrzeugsitz (4), einer Längsführung (14, 16) zum Verschieben des Fahrzeugsitzes (4) in Längsrichtung (10) und einer Querführung (14, 16) zum Verschieben des Fahrzeugsitzes (4) in Querrichtung (12), wobei ferner eine Zwangsführung (44) vorgesehen ist, die derart ausgebildet ist, dass der Fahrzeugsitz (4) beim Verschieben in die Längs- oder Querrichtung (10, 12) automatisch auch in die Quer- oder Längsrichtung (12, 10) verschoben wird, **dadurch gekennzeichnet, dass** der Fahrzeugsitz (4) an der Längsführung (34, 36) in Längsrichtung (10) und die Längsführung (34, 36) an der Querführung (14, 16) in Querrichtung (12) verschiebbar angeordnet ist, wobei die Querführung (14, 16) unterhalb der Längsführung (34, 36) am Fahrzeugboden (24) angeordnet ist.

2. Sitzanordnung (2) nach Anspruch 1, **dadurch gekennzeichnet, dass** die Zwangsführung (44) in der Art einer Kulissenführung ausgebildet ist.

3. Sitzanordnung (2) nach einem der vorangehenden Ansprüche, **dadurch gekennzeichnet, dass** die Zwangsführung (44) einerseits eine Führungsnut (48), die fahrzeugfest oder sitzfest ausgebildet ist, und andererseits ein in der Führungsnut (48) geführtes Führungsteil (50) aufweist, das sitzfest oder fahrzeugfest ausgebildet ist.

4. Sitzanordnung (2) nach Anspruch 3, **dadurch gekennzeichnet, dass** die Führungsnut (48) mindestens einen schräggestellten Abschnitt (54) aufweist, der sich quer zur Längsrichtung (10) und quer zur Querrichtung (12) erstreckt.

5. Sitzanordnung (2) nach Anspruch 4, **dadurch gekennzeichnet, dass** sich der schräggestellte Abschnitt (54) in einem Winkel (α) zwischen 0° und 90°, vorzugsweise in einem Winkel von 45°, quer zur Längsrichtung erstreckt.

6. Sitzanordnung (2) nach einem der Ansprüche 3 bis 5, **dadurch gekennzeichnet, dass** die Führungsnut (48) einen ersten Abschnitt (52) aufweist, der sich ausschließlich in Längsrichtung (10) erstreckt.

7. Sitzanordnung (2) nach Anspruch 6, **dadurch gekennzeichnet, dass** der erste Abschnitt (52) in Fahrtrichtung vor dem schräggestellten Abschnitt (54) angeordnet ist.

8. Sitzanordnung (2) nach einem der Ansprüche 6 oder 7, **dadurch gekennzeichnet, dass** die Führungsnut (48) ferner einen zweiten Abschnitt (56) aufweist, der sich ausschließlich in Längsrichtung (10) erstreckt.

9. Sitzanordnung (2) nach Anspruch 8, **dadurch gekennzeichnet, dass** der zweite Abschnitt (56) entgegen der Fahrtrichtung hinter dem schräggestellten Abschnitt (54) angeordnet ist.

10. Sitzanordnung (2) nach einem der Ansprüche 4 bis 9, **dadurch gekennzeichnet, dass** sich der schräggestellte Abschnitt (54) der Führungsnut (48) derart quer zur Längsrichtung (10) erstreckt, dass der Fahrzeugsitz (4) bei einer Verschiebung in Längsrichtung (10) nach hinten automatisch auch in Richtung der Fahrzeugmitte verschoben wird.

11. Sitzanordnung (2) nach einem der vorangehenden Ansprüche, **dadurch gekennzeichnet, dass** der Fahrzeugsitz (4) in vorbestimmten Rastabständen in Längs- und Querrichtung (10, 12) automatisch arretierbar ist.

12. Sitzanordnung (2) nach Anspruch 11, **dadurch gekennzeichnet, dass** ein Betätigungsmittel zum Lösen der Arretierung vorgesehen ist.

13. Sitzanordnung (2) nach einem der vorangehenden Ansprüche, **dadurch gekennzeichnet, dass** die Querführung (14, 16) in einer Vertiefung (22) in dem Fahrzeugboden (24) angeordnet ist.

14. Sitzanordnung (2) nach Anspruch 13, **dadurch gekennzeichnet, dass** die Querführung (14, 16) derart in der Vertiefung (22) angeordnet ist, dass die Oberseite der Querführung (14, 16) in einer Ebene mit der Oberseite (26) des Fahrzeugbodens (24) angeordnet ist.

15. Sitzanordnung (2) nach einem der Ansprüche 13 oder 14, **dadurch gekennzeichnet, dass** ein Teppichboden (28) auf dem Fahrzeugboden (24) angeordnet ist, der sich über die Querführung (14, 16) in der Vertiefung (22) erstreckt.

16. Sitzanordnung (2) nach Anspruch 15, **dadurch gekennzeichnet, dass** der Teppichboden (28) einen Schlitz (30) aufweist, der sich oberhalb der Querführung (14, 16) in Querrichtung (12) erstreckt.

## Claims

1. A seating arrangement (2) for a motor vehicle, comprising a vehicle seat (4), a longitudinal guide (14, 16) for displacing the vehicle seat (4) in the longitudinal direction (10) and a transverse guide (14, 16) for displacing the vehicle seat (4) in the transverse direction (12), with a forced guide (44) being provided which is arranged in such a way that during displacement in the transverse or longitudinal direction (12, 10) the vehicle seat (4) is automatically also displaced in the longitudinal and transverse direction (10, 12), **characterized in that** the vehicle seat (4) is displaceably arranged in the longitudinal direction (10) in the longitudinal guide (34, 36) and the longitudinal guide (34, 36) is displaceably arranged in the transverse direction (12) on the transverse guide (14, 16), with the transverse guide (14, 16) being arranged on the vehicle floor (24) beneath the longitudinal guide (34, 36).

2. A seating arrangement (2) according to claim 1, **characterized in that** the forced guide (44) is arranged in the manner of a sliding-block guide.

3. A seating arrangement (2) according to one of the preceding claims, **characterized in that** the forced guide (44) comprises a guide groove (48) on the one hand which is arranged fixed to the vehicle or fixed to the seat and a guide part (50) on the other hand which is guided in the guide groove (48) and which is arranged to be fixed to the seat or fixed to the vehicle.

4. A seating arrangement (2) according to claim 3, **characterized in that** the guide groove (48) comprises at least one obliquely positioned section (54) which extends transversely to the longitudinal direction (10) and transversely to the transverse direction (12).

5. A seating arrangement (2) according to claim 4, **characterized in that** the obliquely positioned section (54) extends at an angle (•) of between 0° and 90°, preferably at an angle of 45°, transversely to the longitudinal direction.

6. A seating arrangement (2) according to one of the claims 3 to 5, **characterized in that** the guide groove (48) comprises a first section (52) which extends exclusively in the longitudinal direction (10).

7. A seating arrangement (2) according to claim 6, **characterized in that** the first section (52) is arranged in the travelling direction before the obliquely positioned section (54).

8. A seating arrangement (2) according to one of the claims 6 or 7, **characterized in that** the guide groove (48) further comprises a second section (56) which exclusively extends in the longitudinal direction (10).

9. A seating arrangement (2) according to claim 8, **characterized in that** the second section (56) is arranged against the travelling direction behind the obliquely positioned section (54).

10. A seating arrangement (2) according to one of the claims 4 to 9, **characterized in that** the obliquely positioned section (54) of the guide groove (48) extends transversely to the longitudinal direction (10) in such a way that the vehicle seat (4), during a displacement in the longitudinal direction (10) to the rear, is also automatically displaced in the direction of the middle of the vehicle.

11. A seating arrangement (2) according to one of the preceding claims, **characterized in that** the vehicle seat (4) can automatically be locked in predetermined locking intervals in the longitudinal and transverse direction (10, 12).

12. A seating arrangement (2) according to claim 11, **characterized in that** an actuating means is provided for releasing the locking.

13. A seating arrangement (2) according to one of the preceding claims, **characterized in that** the transverse guide (14, 16) is arranged in a depression (22) in the vehicle floor (24).

14. A seating arrangement (2) according to claim 13, **characterized in that** the transverse guide (14, 16) is arranged in the depression (22) in such a way that the upper side of the transverse guide (14, 16) is arranged in a plane with the upper side (26) of the vehicle floor (24).

15. A seating arrangement (2) according to one of the claims 13 or 14, **characterized in that** a fitted carpet (28) is arranged on the vehicle floor (24) which extends over the transverse guide (14, 16) in the depression (22).

16. A seating arrangement (2) according to claim 15, **characterized in that** the fitted carpet (28) has a slit (30) which extends above the transverse guide (14, 16) in the transverse direction (12).

## Revendications

1. Disposition de siège (2) pour un véhicule à moteur avec un siège de véhicule (4), un guidage longitudinal (14, 16) pour le déplacement du siège de véhicule (4) dans le sens longitudinal (10) et un guidage transversal (14, 16) pour le déplacement du siège de véhicule (4) dans le sens transversal (12), dans lequel est prévu en outre un guidage forcé (44) conçu de telle manière que le siège de véhicule (4), lors d'un déplacement dans le sens longitudinal ou transversal (10, 12), est déplacé automatiquement dans le sens transversal ou longitudinal (12, 10), **caractérisée en ce que** le siège de véhicule (4) est disposé de façon à pouvoir se déplacer sur le guidage longitudinal (34, 36) dans le sens longitudinal (10) et le guidage longitudinal (34, 36) de façon à pouvoir se déplacer sur le guidage transversal (14, 16) dans le sens transversal (12), le guidage transversal (14, 16) étant disposé en dessous du guidage longitudinal (34, 36) sur le plancher du véhicule (24).

2. Disposition de siège (2) selon la revendication 1, **caractérisée en ce que** le guidage forcé (44) est conçu à la manière d'un guidage coulissant.

3. Disposition de siège (2) selon l'une des revendications précédentes, **caractérisée en ce que** le guidage forcé (44) présente d'une part une gorge de guidage (48) fixée au véhicule ou fixée au siège et d'autre part un élément de guidage (50) guidé dans la gorge de guidage (48), qui est fixé au siège ou fixé au véhicule.

4. Disposition de siège (2) selon la revendication 3, **caractérisée en ce que** la gorge de guidage (48) présente au moins une partie oblique (54) qui s'étend transversalement par rapport au sens longitudinal (10) et transversalement par rapport au sens transversal (12).

5. Disposition de siège (2) selon la revendication 4, **caractérisée en ce que** la partie oblique (54) s'étend transversalement par rapport au sens longitudinal selon un angle (α) compris entre 0° et 90°, de préférence selon un angle de 45°.

6. Disposition de siège (2) selon l'une des revendications 3 à 5, **caractérisée en ce que** la gorge de guidage (48) présente une première partie (52) qui s'étend exclusivement dans le sens longitudinal (10).

7. Disposition de siège (2) selon la revendication 6, **caractérisée en ce que** la première partie (52) est disposée devant la partie oblique (54) dans le sens de la marche.

8. Disposition de siège (2) selon l'une des revendications 6 ou 7, **caractérisée en ce que** la gorge de guidage (48) présente en outre une deuxième partie (56) qui s'étend exclusivement dans le sens longitudinal (10).

9. Disposition de siège (2) selon la revendication 8, **caractérisée en ce que** la deuxième partie (56) est disposée derrière la partie oblique (54) en sens inverse du sens de la marche.

10. Disposition de siège (2) selon l'une des revendications 4 à 9, **caractérisée en ce que** la partie oblique (54) de la gorge de guidage (48) s'étend transversalement par rapport au sens longitudinal (10) de telle manière que le siège de véhicule (4) soit déplacé automatiquement en direction du milieu du véhicule lors d'un déplacement dans le sens longitudinal (10) vers l'arrière.

11. Disposition de siège (2) selon l'une des revendications précédentes, **caractérisée en ce que** le siège de véhicule (4) peut être bloqué automatiquement à des intervalles de crans prédéterminés dans le sens longitudinal et transversal (10, 12).

12. Disposition de siège (2) selon la revendication 11, **caractérisée en ce qu'**un moyen d'actionnement est prévu pour desserrer le blocage.

13. Disposition de siège (2) selon l'une des revendications précédentes, **caractérisée en ce que** le guidage transversal (14, 16) est disposé dans un renfoncement (22) dans le plancher du véhicule (24).

14. Disposition de siège (2) selon la revendication 13, **caractérisée en ce que** le guidage transversal (14, 16) est disposé dans le renfoncement (22) de telle manière que la face supérieure du guidage transversal (14, 16) soit disposée dans le même plan que la face supérieure (26) du plancher du véhicule (24).

15. Disposition de siège (2) selon l'une des revendications 13 ou 14, **caractérisée en ce qu'**un tapis de sol (28) est disposé sur le plancher du véhicule (24) et s'étend dans le renfoncement (22) par-dessus le guidage transversal (14, 16).

16. Disposition de siège (2) selon la revendication 15, **caractérisée en ce que** le tapis de sol (28) présente une fente (30) qui s'étend au-dessus du guidage transversal (14, 16) dans le sens transversal (12).
